# EUROPEAN PATENT SPECIFICATION

(11) **EP 3 873 854 B1**
(45) Date of publication and mention of the grant of the patent: **26.06.2024**
(21) Application number: 18808108.7
(22) Date of filing: 29.10.2018
(51) Int. Cl.: C02F 1/48, C02F 1/30, C02F 1/36, C02F 101/20, C02F 101/22, C02F 101/30, C02F 103/14, C02F 103/30, C02F 103/34

(54) **A METHOD FOR TREATING WATER CONTAINING POLLUTANTS, WATER CLEANING REACTORS, AND WATER CLEANING ASSEMBLIES**
VERFAHREN ZUR BEHANDLUNG VON SCHADSTOFFHALTIGEM WASSER, WASSERREINIGUNGSREAKTOREN UND WASSERREINIGUNGSANORDNUNGEN
PROCÉDÉ DE TRAITEMENT D'EAU CONTENANT DES POLLUANTS, RÉACTEURS DE NETTOYAGE D'EAU ET ENSEMBLES DE NETTOYAGE D'EAU

(43) Date of publication of application: 08.09.2021
(73) Proprietor: Oxyle AG, 8092 Zürich (CH)
(72) Inventor: MUSHTAQ, Fajer, 8620 Wetzikon (CH); PANÉ VIDAL, Salvador, 8003 Zurich (CH); CHEN, Xiangzhong, 8092 Zurich (CH); NELSON, Bradley, 8126 Zumikon (CH)
(74) Representative: P&TS SA (AG, Ltd.)
(86) International application number: PCT/IB2018/058445
(87) International publication number: WO 2020/089672

(56) References cited:
- CN-A- 106 396 246
- DE-A1- 10 131 173
- US-A1- 2002 187 082
- US-A1- 2010 051 557
- US-A1- 2014 138 310
- US-B1- 6 596 182
- LIANG ZHANG ET AL: "Piezoelectric materials for catalytic/photocatalytic removal of pollutants: Recent advances and outlook", APPLIED CATALYSIS B: ENVIRONMENTAL, ELSEVIER, AMSTERDAM, NL, vol. 241, 15 September 2018 (2018-09-15), pages 256-269, XP085503571, ISSN: 0926-3373, DOI: 10.1016/J.APCATB.2018.09.028

## Description

### Field of the invention

The present invention concerns a method for treating water containing pollutants by bringing the polluted water so that the pollutants in the polluted water come into contact with the surfaces of magnetoelectric particles, and then applying a magnetic field to the magnetoelectric particles. There is further provided water cleaning reactors which can be used to perform the methods of the present invention; and water cleaning assemblies which use any of said water cleaning reactors.

### Description of related art

Water pollution is an ever increasing global problem. At present, due to the release of toxic and carcinogenic organic pollutants such as textile dyes, pesticides and pharmaceuticals, water pollution levels are increasing alarmingly.

Current methods which are used to remove recalcitrant pharmaceuticals, pesticides and synthetic dyes from water, include the use of biological filtration, membrane filtration and activated carbon. However, these methods possess a low pollutant removal yield. Moreover, these methods work on the principle of adsorbing the pollutants from the water (they do not degrade the pollutants).

Other methods which are currently used to degrade pollutants from water include chemical oxidation processes that use hydroxyl radicals; these chemical oxidation processes work on the principle of degrading organic pollutants (i.e. micro-pollutants) that are in the water. Examples of chemical oxidation processes include Advanced Oxidation Processes (AOPs), ozone/hydrogen peroxide (H₂O₂), UV light/ozone; with Advanced Oxidation Processes (AOPs) being the most popular method in use today. However, the existing chemical oxidation processes are insufficient for many applications, in particular, the existing chemical oxidation processes are slow to degrade the pollutants, and thus the treatment of polluted water using such processes is slow.

US 2002/187082 disclose a method of treating polluted water which uses light-activated piezocatalysts. Specifically, photocatalyst-magnetic composite particles, which have a photocatalytic shell coating of TiO2, are added to the polluted water, and light is then applied to the particles. The light, once incident on the photocatalytic shell coating of the particles, creates electric charges on the surface of the particles, which in turn cause redox reactions to occur which degrade said pollutants in the water.

US2014138310A discloses a method for sewage treatment, using a device for sewerage treatment; the method uses magnetic field to enhance a bacteria's capacity to clean water. Said device for sewage treatment includes a reactor and a magnetic field generator. The reactor includes a water inlet at the upper end, a water outlet on the side wall, and a sludge outlet at the lower end. A stirrer and an aeration device are disposed in the reactor. The reactor is filled with magnetic powder and activated sludge. The magnetic field generator includes a magnetic field tester, an iron cover, a power supply, a transformer, and a spiral coil. The spiral coil loops around the outer surface of the reactor. The transformer, the spiral coil, and the power supply are connected in sequence. The iron cover surrounds the periphery and the bottom of the reactor, and the magnetic field tester is disposed within the reactor.

US6596182, US2010051557A and CN106396246 each disclose methods which use powders which simply absorb heavy metals from contaminated water.

Specifically, US6596182 discloses a process for removing heavy metals from water. The process includes the steps of introducing magnetite to a quantity of water containing heavy metal. The magnetite is mixed with the water such that at least a portion of, and preferably the majority of, the heavy metal in the water is bound to the magnetite. Once this occurs the magnetite and absorbed metal is removed from the water by application of a magnetic field. In most applications the process is achieved by flowing the water through a solid magnetized matrix, such as steel wool, such that the magnetite magnetically binds to the solid matrix. The magnetized matrix preferably has remnant magnetism, but may also be subject to an externally applied magnetic field. Once the magnetite and associated heavy metal is bound to the matrix, it can be removed and disposed of, such as by reverse water or air and water flow through the matrix. The magnetite may be formed in-situ by the addition of the necessary quantities of Fe(II) and Fe(III) ions, or pre-formed magnetite may be added, or a combination of seed and in-situ formation may be used.

US2010051557A discloses a process, which is used to eliminate heavy metal cations from the aqueous media. The heavy metal cations selected for this purpose are cadmium, lead and copper. The separation system consists of a two-stage process: In the first stage, the iron oxide nanoparticles are suspended in an aqueous medium contaminated with the heavy metal cations. In the second stage, the solution is brought into contact with a ferromagnetic matrix (or a paramagnetic matrix) magnetized by the application of an outside magnetic field. The heavy metal cations are deposited on the matrix under the imposed magnetic field. This two-stage process makes it possible to separate the heavy metal cations from the aqueous medium. The wire matrices are upon the completion of separation washed away by water or air current.

CN106396246A discloses a sewage treatment plant. The sewage treatment plant includes an anaerobic tank, an anoxic tank, an aerobic tank, a magnetic field generator, a sewage secondary filtering device and a magnetic powder recovering device. The upper end of the anaerobic tank is provided with a water inlet. The anaerobic tank is filled with magnetic powder and activated sludge. The magnetic field generator is at the periphery of the anaerobic tank. The magnetic field generator includes a magnetic field tester, an iron cover, a power supply, a transformer and a spiral coil. The spiral coil winds the periphery of the anaerobic tank and is connected to the transformer. The transformer is connected to the power supply. A sensing end of the magnetic field tester penetrates into the anaerobic tank. The iron cover covers the periphery and bottom of the spiral coil. A weakly-changing magnetic field is applied onto sludge-zone microbes, a biochemical reaction, magnetobiology effects and magnetic field force movement occur in a reaction zone at the same time, and an anaerobic-anoxic-aerobic living environment is provided for the microbes, thus enhancing organic matter degradation by the microbes.

Publication "Piezoelectric materials for catalytic/photocatalytic removal of pollutants: recent advances and outlook" by Liang Zhang et al, discloses mechanical stress activated piezoelectric materials. Mechanical stresses are commonly applied to these piezoelectric materials using aggressive ultrasonic vibrations; however these ultrasonic vibrations are an aggressive form mechanical stress which would damage or destroy particles composed of such piezoelectric materials.

DE10131173 A1 discloses a method for removing heavy metals by applying a reduction means and absorbing the reduced metals on the surface of a metallic particle having a iron oxide core and a titanium dioxide shell.

It is an aim of the present invention to mitigate, or obviate, the disadvantages associated with the existing methods/processes used to treat polluted water.

### Brief summary of the invention

According to the invention, these aims are achieved by means of a method for treating water containing pollutants as defined by claim 1. The method comprises the steps of, bringing said water in contact with said magnetoelectric particles so that the pollutants in the water come into contact with the surfaces of magnetoelectric particles; applying a magnetic field to the magnetoelectric particles so as to generate electric charges on the surface of said magnetoelectric particles, wherein said electric charges on the surface of said magnetoelectric particles cause redox reactions to occur which degrade said pollutants in the water.

Degrading of said pollutants in the water may comprise oxidization of the pollutants and/or reduction of said pollutants. In one embodiment said pollutants comprise organic pollutants, and wherein said electric charges on the surface of said magnetoelectric particles cause redox reactions to occur which oxidize said organic pollutants. In an embodiment said pollutants comprise toxic heavy metals, and wherein said electric charges on the surface of said magnetoelectric particles cause redox reactions to occur which reduce or oxidize said metals to less harmful metals, thereby lowering the toxicity of said metals.

Oxidization of said pollutants is the increase in the oxidation state of the molecules of the pollutants. In one embodiment said electric charges on the surface of said magnetoelectric particles further cause redox reactions to occur which reduces said pollutants in the water. Reduction of said pollutants is the decrease in the oxidation state of the molecules of the pollutants.

In one embodiment the step of bringing said water in contact with said magnetoelectric particles, comprises adding magnetoelectric particles to said water. In this embodiment the magnetoelectric particles mix with the water. In another embodiment the step of bringing said water in contact with said magnetoelectric particles, comprises passing the water through a porous membrane which comprises said magnetoelectric particles.

In the present invention the magnetoelectric particles can effectively utilize magnetic fields to degrade organic pollutants. Advantageously, the method of the present invention achieves improved reaction rate constants thus achieving faster treatment of polluted water.

In one embodiment light is directed onto the magnetoelectric particles, in addition to the application of said magnetic field. A light may be ambient light (i.e direct natural sunlight), or the light may be provided by a light source (such as an optical fibre, or LED, for example). Preferably, the light source is a solar simulator light source (200 nm <λ< 1100 nm) or white LED lights. When light is incident on the magnetoelectric particles, it activates the photocatalytic properties of the magnetoelectric particles, thus creating electric charges on the surface of the magnetoelectric particles; the electric charges initiate a series of redox reactions for oxidation of pollutants in water. Most preferably, the light which is directed onto the magnetoelectric particles, has a light intensity in the range of 5 to 100 mW cm⁻².

In another embodiment a mechanical stress is applied to the magnetoelectric particles, in addition to the application of said magnetic field and/or in addition to the application of light. More preferably an ultrasonic transducer is used to apply a mechanical stress to the magnetoelectric particles. Specifically the ultrasonic transducer is used to generate ultrasonic wave vibrations which are directed to the magnetoelectric particles; when the ultrasonic wave vibrations are incident on the magnetoelectric particles they create a mechanical stress in the magnetoelectric particles. In one embodiment the magnetoelectric particles are mixed in water, so that the ultrasonic wave vibrations are transmitted through the water to the magnetoelectric particles. The mechanical stresses created in the magnetoelectric particles by the ultrasonic wave vibrations generate the electric charges on the surface of the magnetoelectric particles; the electric charges produce the radicals for oxidation of pollutants. Most preferably the ultrasonic transducer emits a compression or transverse continuous wave at its frequency from 20 kHz to 500 kHz and the frequency of the transducer is matched to the size of the water cleaning vessel.

Advantageously, the light and/or mechanical stress further promotes the generation of electric charges on the surface of said magnetoelectric particles. Advantageously, by directing light to the magnetoelectric particles and/or applying a mechanical stress to the magnetoelectric particles, (in addition to the application of said magnetic field to the magnetoelectric particles), increases pollutant degradation rate constant further, thus achieving an even faster treatment of the polluted water. However it should be understood that the application of light and/or mechanical stress is not essential to the present invention; the present invention could achieve the advantages of cleaning polluted water using only the application of magnetic field to the magnetoelectric particles.

Nonetheless, the ability of the magnetoelectric particles of the present invention to utilize multiple, combinatorial energy sources (magnetic field, light, and mechanical stress) to generate electric charges on their surface which can cause redox reactions which oxidize pollutants in water, renders the magnetoelectric particles of the present invention highly efficient and cost-effective catalysts for not only water remediation, but also for rapid hydrogen production by splitting water.

According to an embodiment of the present invention there is provided a method of cleaning water containing pollutants, the method comprising the steps of, passing said water through a membrane which has pore defined therein, said membrane comprising magnetoelectric particles; applying a magnetic field to the membrane so as to generate electric charges on the surface of said membrane, wherein said electric charges on the surface of said membrane cause redox reactions to occur which oxidize said pollutants in the water which passed through said membrane.

According to a further aspect of the present invention there is provided a water cleaning reactor as defined in claim 11 for carrying out any of the embodiments of the above-mentioned method. Various embodiments of the water cleaning reactor are provided.

Each of the various water cleaning reactor embodiments can be used to perform the above-mentioned method of cleaning water containing pollutants. There is further provided methods of cleaning polluted water which uses any one of the embodiments of the above-mentioned water cleaning reactor.

According to a further aspect of the present invention there is provided a water cleaning assembly which comprises any one of the embodiments of the above-mentioned water cleaning reactor. Various embodiments of the water cleaning assembly are provided.

Each of the various water cleaning assembly embodiments can be used to perform the above-mentioned method of cleaning water containing pollutants. There is further provided methods of cleaning polluted water which uses any one of the embodiments of the above-mentioned water cleaning assembly.

### Brief Description of the Drawings

The invention will be better understood with the aid of the description of an embodiment given by way of example and illustrated by the figures, in which:
Fig. 1 shows a block diagram of a water cleaning assembly according to the present invention which uses the water cleaning reactor of figure 2a,b;
Fig. 2a shows a longitudinal-sectional view of a water cleaning reactor according to an embodiment of the present invention; Fig.2b shows a cross-sectional view of the water cleaning reactor of figure 2a;
Fig. 3a shows a longitudinal-sectional view of a water cleaning reactor according to a further embodiment of the present invention; Fig.3b shows a cross-sectional view of the water cleaning reactor of figure 3a;
Fig. 4 shows a longitudinal-sectional view of a water cleaning reactor according to a further embodiment of the present invention;
Fig. 5 shows a block diagram of a water cleaning assembly according to the present invention which uses the water cleaning reactor of figure 6a,b;
Fig. 6a shows a longitudinal-sectional view of a water cleaning reactor according to an embodiment of the present invention; Fig.6b shows a cross-sectional view of the water cleaning reactor of figure 6a;
Fig. 7a shows a longitudinal-sectional view of a water cleaning reactor according to a further embodiment of the present invention; Fig.7b shows a cross-sectional view of the water cleaning reactor of figure 7a;
Fig. 8 shows a longitudinal-sectional view of a water cleaning reactor according to a further embodiment of the present invention.

### Detailed Description of possible embodiments of the Invention

According to an embodiment of the present invention there is provided, a method of cleaning water containing pollutants, the method comprising the steps of, adding magnetoelectric particles to said water, applying a magnetic field to the magnetoelectric particles so as to generate electric charges on the surface of said magnetoelectric particles, wherein said electric charges on the surface of said magnetoelectric particles cause redox reactions to occur which oxidize said pollutants in the water. Advantageously, compared to prior art method/processes which are used to treat polluted water, the method of the present invention can obtain much higher pollutant degradation rate constants (1.5 times and 3 times higher), thus achieving faster treatment of the polluted water.

Preferably said step of applying a magnetic field to the magnetoelectric particles comprises passing an alternating current through a conductor so as to generate said magnetic field which is applied to the magnetoelectric particles.

In one embodiment light is directed to the magnetoelectric particles and/or a mechanical stress is applied to the magnetoelectric particles, in addition to the application of said magnetic field. The light and/or mechanical stress further promotes the generation of electric charges on the surface of said magnetoelectric particles. Advantageously, by directing light to the magnetoelectric particles and/or applying a mechanical stress to the magnetoelectric particles increases pollutant degradation rate constant further, thus achieving an even faster treatment of the polluted water.

In one embodiment said pollutants comprise organic pollutants, and said electric charges on the surface of said magnetoelectric particles are sufficient to cause redox reactions to occur which oxidize said organic pollutants (such as synthetic dyes, for example). Oxidization of said organic pollutants destroys said organic pollutants. In the present application destruction of said organic pollutants include, but is not limited to, degradation of said organic pollutants. Destruction or degradation of organic pollutant means that hydroxyl radicals lead to oxidation of these organic compounds by means of, hydrogen abstraction, radical-radical reactions, electrophillic addition, and/or electron transfer reactions. These oxidation reactions ultimately lead to complete mineralization of the organic pollutants into less harmful compounds such as CO₂ and H₂O

In one embodiment said pollutants may comprise metals (i.e. toxic metals); in this case said electric charges generated on the surface of said magnetoelectric particles are sufficient to cause redox reactions to occur which reduce said toxic metals. Reduction of the toxic metals reduces their toxicity. In the present application said toxic metals may include, but is not limited to, one or more of the group comprising chromium (VI), arsenic (VI) and arsenic (V).

In the preferred embodiment the step of adding magnetoelectric particles to said water comprises adding a dosage of magnetoelectric particles in the range 0.1-20 mg/mL to said water. More preferably a dosage in the range 1-5 mg/mL of magnetoelectric particles are added to said water. Most preferably a dosage of 1 mg/mL of magnetoelectric particles are added to said water.

In the preferred embodiment the step of applying a magnetic field to the magnetoelectric particles comprises applying a magnetic field having a magnitude of between 0.1 mT-50 mT to the magnetoelectric particles. More preferably a magnetic field of magnitude between 10 mT - 20 mT is applied to the magnetoelectric particles. Most preferably a magnetic field of magnitude 15 mT is applied to the magnetoelectric particles.

In the preferred embodiment the step of applying a magnetic field to the magnetoelectric particles comprises applying a magnetic field having a frequency of between 0.1 kHz-10 kHz to the magnetoelectric particles. More preferably a magnetic field having a frequency of between 1 kHz-5 kHz is applied to the magnetoelectric particles. Most preferably a magnetic field having a frequency of 1 kHz is applied to the magnetoelectric particles.

In the preferred embodiment the magnetic field is applied to the magnetoelectric particles for a period of between 0.5-5 hours. More preferably the magnetic field is applied to the magnetoelectric particles for a period of between 1-3 hours. Most preferably the magnetic field is applied to the magnetoelectric particles for a period of 1 hour.

Thus in the preferred embodiment of the present invention a dosage of magnetoelectric particles in the range 1-5 mg/mL is added to said water, and the step of applying an AC magnetic field to the magnetoelectric particles comprises applying a magnetic field having a magnitude in the range 10-20 mT, at a frequency in the range 1-5 kHz, for a period of time between 1-3 hours. In the most preferred embodiment of the present invention a dosage of 1 mg/mL of magnetoelectric particles is added to said water, and the step of applying a magnetic field to the magnetoelectric particles comprises applying an alternating magnetic field (i.e. a magnetic field which is generated by passing an alternating current though a conductor) having a magnitude of 15 mT, at a frequency of 1 kHz, for a period of 1 hour at a dosage of 1 mg/mL of magnetoelectric particles. The magnetic field applied under such conditions, generates electric charges on the surface of said magnetoelectric particles, which causes redox reactions to occur, which further oxidizes said pollutants in the water. The oxidization of organic pollutants destroys organic pollutants and/or the reduction of toxic metal pollutants makes those metals less toxic; accordingly the quality of the water is improved.

Optionally, after the step of applying a magnetic field to the magnetoelectric particles has been completed, the magnetoelectric particles can be collected from the water, washed, dried and then reused. Most preferably a magnet is used to collect the magnetoelectric particles from the water. Most preferably the collected magnetoelectric particles are then washed with deionised water and/or ethanol. Preferably, after the magnetoelectric particles have been washed, they are dried. Most preferably step of drying said washed magnetoelectric particles comprises drying said washed magnetoelectric particles in air which has a temperature of 60 degrees Celsius for 2 hours. The washed and dried magnetoelectric particles can be reused (i.e. the magnetoelectric particles can be added to water which contains pollutants, and a magnetic field applied to the magnetoelectric particles so as to generate electric charges on the surface of said magnetoelectric particles, which cause redox reactions to occur which oxidize said pollutants in the water.

The magnetoelectric particles which are used in the method of the present invention can take any suitable form. In a preferred embodiment the magnetoelectric particles each comprise a core having a coating; said core preferably comprises a magnetostrictive material and said coating comprises a piezoelectric material. The magnetoelectric particles which have a core preferably comprising a magnetostrictive material, and a coating preferably comprising a piezoelectric material, are referred to as composite magnetoelectric particles. In the preferred embodiment the core comprises cobalt ferrite and the coating comprises bismuth ferrite material; most preferably the core comprises single crystalline cobalt ferrite and the coating comprises single crystalline bismuth ferrite.

Advantageously, magnetostrictive materials experience strain under an alternating magnetic field, and piezoelectric materials generate electric charges (i.e. can induce a polarization) when strained; accordingly, by providing magnetoelectric particles which have core comprising a magnetostrictive material and a coating on said core, said coating comprising a piezoelectric material, then electric charges will be generated on the surface of the magnetoelectric particles when the magnetoelectric particles are subjected to a magnetic field.

It should be understood that the core may comprise any suitable magnetostrictive material including any one or more of, cobalt ferrite, nickel ferrite, iron oxide, iron gallium, nickel-manganese-gallium, iron-manganese-gallium, iron-palladium, Terfenol-D. Advantageously, magnetoelectric particles having a core comprising material with a magnetostriction coefficient higher than 200 ppm. Materials with magnetostriction coefficients greater than 200 ppm are preferred such as, iron-palladium (400 ppm), cobalt ferrite (590 ppm) and nickel-manganese-gallium (720 ppm), as they undergo a larger deformation under magnetic fields and hence, can lead to higher electric charge generation on the surface of the piezoelectric materials. It should be understood that the coating may comprise any suitable piezoelectric material. For example the coating may comprise piezoelectric material comprising any one or more of, bismuth ferrite, barium titanate, zinc oxide, polyvinylidene fluoride, barium zirconate-titanate/barium calcium-titanate.

In another example the magnetoelectric particles each comprise a plurality of magnetostrictive layers each magnetostrictive layer coated by a respective piezoelectric coating so that the magnetoelectric particles have a layered structure of alternating magnetostrictive-piezoelectric layers .

In another example the magnetoelectric particles comprise multiferroic materials. Said multiferroic materials comprises a core material only (i.e. the core is without a piezoelectric coating) that is capable of producing electric charges under magnetic fields. These multiferroic materials are referred to as single-phase magnetoelectric particles. The said multiferroic materials may comprise any suitable multiferroic material including one or more of, bismuth ferrite, bismuth manganite and/or cupric oxide.

The magnetoelectric particles may comprise a multiferroic core only (i.e. the core is without a coating (e.g. is without a piezoelectric coating) (single phase) or the magnetoelectric particles may comprise a magnetostrictive core and a piezoelectric coating (composite). Single-phase magnetoelectric particles comprise a core only, said core comprising one or more of bismuth ferrite, bismuth manganite and cupric oxide. Composite magnetoelectric particles comprise a magnetostrictive core and a piezoelectric coating provided on the core; preferably the core comprising one or more of Terfenol-D, iron-gallium, iron-palladium, iron-manganese-gallium, iron-platinum, nickel-manganese-gallium, Metglas, cobalt ferrite, nickel ferrite, iron oxide, iron-cobalt, samarium ferrite and terbium ferrite, and the coating comprising one or more of bismuth ferrite, bismuth manganite, cupric oxide and barium zirconate-titanate/barium calcium-titanate.

The composite magnetoelectric particles can have various architectures. These architectures comprise having the magnetostrictive core embedded in a piezoelectric matrix. Magnetostrictive materials can be comprised of any of or more of the following alloys: Terfenol-D, iron-gallium, iron-palladium, iron-manganese-gallium, iron-platinum, nickel-manganese-gallium, Metglas, cobalt ferrite, nickel ferrite, iron oxide, iron-cobalt, samarium ferrite and terbium ferrite. Piezoelectric materials can comprise of any one or more of, bismuth ferrite, barium titanate, zinc oxide, polyvinylidene fluoride, lithium niobate, lithium tantalite, sodium potassium niobate.

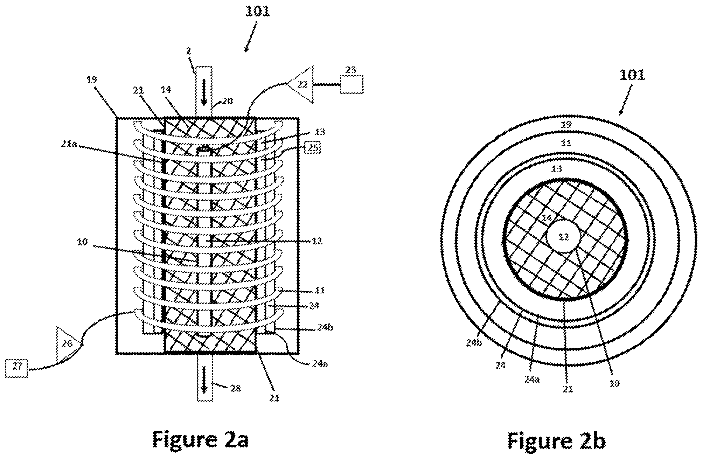

According to a further aspect of the present invention there is provided a water cleaning reactor which comprises any of the above-mentioned magnetoelectric particles. Figures 2a, 3a, 4b, 6a, 7a and 8 show different water cleaning reactors according to the present invention, each of which comprises any of the above-mentioned magnetoelectric particles. In some of the water cleaning reactor embodiments the magnetoelectric particles are provided in a substrate, and the magnetoelectric particles and substrate define a membrane, and in other reactor embodiments the magnetoelectric particles are free moving.

Referring to the water cleaning reactor 101 which is shown in Figures 2a and 2b; Figure 2a provides a longitudinal section view of the water cleaning reactor 101 while Figure 2b provides a cross section view of the water cleaning reactor 101. An inlet 20 is fluidly connected to one end of the water cleaning reactor 101 which can be used to supply polluted water to the cleaning reactor 101; and an outlet 28 is fluidly connected to an opposite end of the water cleaning reactor 101.

The water cleaning reactor 101 comprises a casing 19. In this embodiment the casing 19 comprise stainless steel, however it should be understood that the casing 19 could be formed from any suitable material. In this example the casing is cylindrical shaped; the casing can have any suitable dimensions, preferably the casing has a diameter of between 2 cm-30 cm and has a length between 2 cm-100 cm.

Housed within the casing 19 there is a tubular vessel 21; the tubular vessel 21 is composed of a material that is transparent to sunlight (so that light can pass through the tubular vessel 21). For example the tubular vessel 21 may be composed of any one or more of, plexiglass, polyvinyl chloride, poly(methyl methacrylate), quartz silicate etc. However it should be understood that the tubular vessel 21 could be formed from any other suitable material which is transparent to light. The tubular vessel 21 can have any suitable dimensions, preferably the tubular vessel 21 has a diameter of between 1 cm-25 cm and has a length between 1 cm-100 cm.

Inside the tubular vessel 21 there is provided a porous magnetic membrane 14; the porous magnetic membrane 14 comprises the any of the above-described magnetoelectric particles according to the present invention. In this example the porous magnetic membrane 14 is arranged to fill the inside of the tubular vessel 21; however, in this embodiment there is a channel 10 defined in porous magnetic membrane 14 within which there is provided an ultrasonic transducer 12.

The ultrasonic transducer 12 can be operated to emit acoustic waves which impart mechanical stress on the porous magnetic membrane 14, and thus impart mechanical stress on the magnetoelectric particles in the porous magnetic membrane 14; the mechanical stress on the magnetoelectric particles cause the generation of electric charges on the surface of said magnetoelectric particles, which can cause redox reactions to occur which oxidize pollutants in the water. In this embodiment the ultrasonic transducer 12 is driven by a waveform generator 22 and an amplifier 23, although these features are optional and are not an essential part of the water cleaning reactor 101. In one embodiment the ultrasonic transducer 12 is configured such that it can be operated between 20-500 kHz (to initiate mechanical stress in magnetoelectric particles in the porous magnetic membrane 14).

The water cleaning reactor 101 further comprises a tubular support vessel 24; the tubular vessel 21 is positioned within the tubular support vessel 24. The tubular support vessel 24 can comprise any suitable material, in this example the tubular support vessel 24 comprises stainless steel.

Between an inner surface 24a of the tubular support vessel 24 and an outer surface of the tubular vessel 21a, there is provided one or more light sources 13. Importantly the one or more light sources 13 are configured such that they can operated to exhibit light which is incident on the porous magnetic membrane 14. When light is incident on the porous magnetic membrane 14 it will cause electric charges to be generated on the surface of said magnetoelectric particles within the porous magnetic membrane 14, which can cause redox reactions to occur which oxidize pollutants in the water. In one embodiment light source 13 (e.g. LEDs or optical fibres) is configured to provide a light intensity of 10-100 mW cm⁻².

In this embodiment the tubular vessel 21 is interposed between the one or more light sources 13 and the porous magnetic membrane 14, since the tubular vessel 21 is composed of transparent material the light which is exhibited from the one or more light sources 13 can freely pass through the tubular vessel 21 and be incident on the porous magnetic membrane 14. The distance between the one or more light sources 13 and the porous magnetic membrane 14 is thus defined by the thickness of the tubular vessel 21; most preferably the distance between the one or more light sources 13 and the porous magnetic membrane 14 is between 0.1 cm-5 cm (in other words the thickness of the tubular vessel 21 is preferably between 0.1 cm-5 cm). In this example the one or more light sources are mounted on (and secured to) the inner surface 24a of the tubular support vessel 24. The one or more light sources may be mechanically fixed to the inner surface 24a of the tubular support vessel 24 by glue or clamps for example. The one or more light sources 13 may take any suitable form; in one embodiment the one or more light sources 13 comprises one or more LED strips (preferably flexible LED strips); in another embodiment the one or more light sources 13 comprises one or more optical fibres each of which are connected to a lamp 25.

One or more solenoid coils 11 are wound around an outer surface 24b of the tubular support vessel 24. A current can be passed through these one or more solenoid coils 11 to cause the generation of a magnetic field; the generated magnetic field acts on the said magnetoelectric particles within the porous magnetic membrane 14 to cause electric charges to be generated on the surface of said magnetoelectric particles, which can cause redox reactions to occur which oxidize pollutants in the water. Specifically, under the influence of the generated magnetic field, the magnetoelectric particles within the porous magnetic membrane 14 experiences strain which cause electric charges to be generated on the surface of said magnetoelectric particles, which can cause redox reactions to occur which oxidize pollutants in the water.

The one or more solenoid coils 11 may comprise copper. The magnitude of the magnetic field which is generated by the one or more solenoid coils 11 when they conduct current, is directly proportional to the turn density (i.e. the number of turns around the outer surface 24b of the tubular support vessel 24) of the one or more solenoid coils 11 and the magnitude of the current which is conducted through the one or more solenoid coils 11; accordingly the magnitude of the magnetic field which is generated by the one or more solenoid coils 11, can be tuned by adjusting the turn density and/or the magnitude of the current which is passed through the one or more solenoid coils 11. For example to increase the magnitude of the magnetic field which is generated the turn density can be increased, and/or a larger current is conducted through the one or more solenoid coils 11; conversely, to decrease the magnitude of the magnetic field which is generated, the turn density can be decreased, and/or a smaller current is conducted through the one or more solenoid coils 11. The larger the magnetic field acting on the magnetoelectric particles within the porous magnetic membrane 14, the more electric charges that will be generated on the surface of said magnetoelectric particles; the more electric charges generated on the surface of said magnetoelectric particles the more redox reactions occur and thus the more pollutants in the water can be oxidized. Accordingly, the magnitude of the magnetic field which is generated will be proportional to the level of pollutants in the water which is to be purified. Most preferably the turn density of the one or more solenoid coils 11 and the magnitude of the current which is conducted through the one or more solenoid coils 11 should be such that one or more solenoid coils 11 generates a magnetic field in the range of 0.1 mT to 50 mT at frequencies between 0.2 kHz to 50 kHz.

More preferably the current which is conducted through the one or more solenoid coils 11 will be an alternating current in the form of a sinusoidal signal. Most preferably the current will be provided by a function generator 27 and the current signal will be amplified using an amplifier 26, before it is conducted through the one or more solenoid coils 11.

During use of the water cleaning reactor 101 polluted water is passed into the water cleaning reactor 101 via the inlet 20. Current is passed through the solenoid coils 11 to cause the generation of a magnetic field; the generated magnetic field acts on the said magnetoelectric particles within the porous magnetic membrane 14 to cause electric charges to be generated on the surface of said magnetoelectric particles, which can cause redox reactions to occur, which oxidize pollutants in the water. Additionally, optionally, the one or more light sources 13 may be operated to exhibit light; the exhibited light is incident on the porous magnetic membrane 14; the light which is incident on the porous magnetic membrane 14 will cause electric charges to be generated on the surface of said magnetoelectric particles within the porous magnetic membrane 14, which can cause redox reactions to occur which oxidize pollutants in the water. Additionally, optionally, the ultrasonic transducer 12 can be operated to emit acoustic waves which impart mechanical stress on the porous magnetic membrane 14, and thus impart mechanical stress on the magnetoelectric particles in the porous magnetic membrane 14; the mechanical stress on the magnetoelectric particles cause the generation of electric charges on the surface of said magnetoelectric particles, which can cause redox reactions to occur which oxidize pollutants in the water. The redox reactions oxidize organic pollutants which may be present in the polluted water, and will reduce the toxicity of toxic heavy metals present in the polluted water to less harmful metals; accordingly the water which is output from the outlet 28 of the water cleaning reactor 101 will be of improved quality.

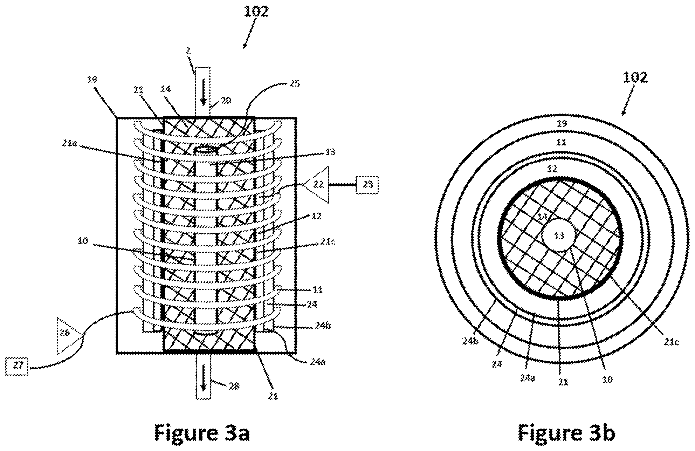

Figures 3a and 3b illustrate a water cleaning reactor 102 according to a further embodiment of the present invention. Figure 3a provides a longitudinal section view of the water cleaning reactor 102 while Figure 3b provides a cross section view of the water cleaning reactor 102. The water cleaning reactor 102 has many of the same features as the water cleaning reactor 101 shown in Figures 2a and 2b and like features are awarded the same reference numbers.

In the water cleaning reactor 102, the one or more light sources 13 are located in the channel 10 defined in porous magnetic membrane 14. Most preferably, in this embodiment, the one or more light sources 13 comprise optical fibers, or LED strips which are connected to a power supply 25. The outer surface 21a of the tubular vessel 21 is further provided with a reflective coating 21c so more of the light which is emitted by the one or more light sources 13 is incident on the magnetoelectric particles within the porous magnetic membrane 14; in this example the reflective coating 21c comprises silver. Most preferably the coating has a thickness of between 0.5 mm-2 mm.

The ultrasonic transducer 12 has a tubular form and abuts the reflective coating 21c which is on the outer surface 21a of the tubular vessel 21, so that the ultrasonic transducer 12 is interposed between the reflective coating 21c of the tubular vessel 21 and the tubular support vessel 24. In this example ultrasonic transducer 12 is attached to the reflective coating 21c which is on the outer surface 21a of the tubular vessel 21. In this example ultrasonic transducer 12 is configured such that it is operable to produce acoustic waves with frequency between 10 and 200 kHz. Preferably the ultrasonic transducer 12 comprises ultrasonic plates or ultrasonic discs.

During use of the water cleaning reactor 102 polluted water is passed into the water cleaning reactor 101 via the inlet 20. Current is passed through the solenoid coils 11 to cause the generation of magnetic fields; the generated magnetic field acts on the said magnetoelectric particles within the porous magnetic membrane 14 to cause electric charges to be generated on the surface of said magnetoelectric particles, which can cause redox reactions to occur, which oxidize pollutants in the water. Additionally, optionally, the one or more light sources 13 may be operated to exhibit light; the exhibited light is incident on the porous magnetic membrane 14; the light which is incident on the porous magnetic membrane 14 will cause electric charges to be generated on the surface of said magnetoelectric particles within the porous magnetic membrane 14, which can cause redox reactions to occur which oxidize pollutants in the water. Furthermore light which has passed through the porous magnetic membrane 14 will be incident on the reflective coating 21c which is on the outer surface 21a of the tubular vessel 21, and will be reflected back towards the porous magnetic membrane 14; this reflected light will be incident on the porous magnetic membrane 14 and will cause electric charges to be generated on the surface of said magnetoelectric particles within the porous magnetic membrane 14, which can cause redox reactions to occur which oxidize pollutants in the water. Accordingly in this embodiment a higher proportion of the light which is emitted by the light source 13 will be incident on the porous magnetic membrane 14 to cause electric charges to be generated on the surface of said magnetoelectric particles within the porous magnetic membrane 14. Additionally, optionally, the ultrasonic transducer 12 can be operated to emit acoustic waves which impart mechanical stress on the porous magnetic membrane 14, and thus impart mechanical stress on the magnetoelectric particles in the porous magnetic membrane 14; the mechanical stress on the magnetoelectric particles cause the generation of electric charges on the surface of said magnetoelectric particles, which can cause redox reactions to occur which oxidize pollutants in the water. The redox reactions oxidize organic pollutants which may be present in the polluted water, and will reduce the toxicity of toxic heavy metals present in the polluted water to less harmful metals; accordingly the water which is output from the outlet 28 of the water cleaning reactor 102 will be of improved quality.

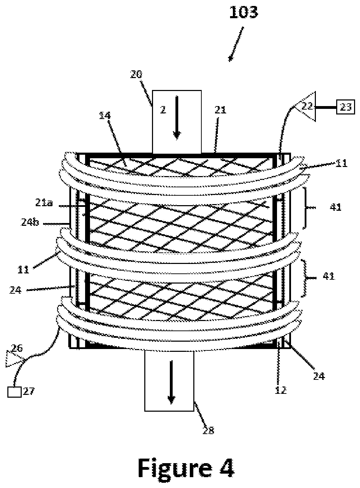

It is important to note that in each of the water cleaning reactors 101 and 102, embodiments of the present invention (and in each of the assemblies which used such water cleaning reactors), the ultrasonic transducers 12 and light sources are optional features. The water cleaning reactor embodiment could still achieve the effect of oxidizing pollutants in the water without ultrasonic transducers 12 and/or light sources. An example of a water cleaning reactor embodiments which is without light sources is illustrated in Figure 4.

Figure 4 illustrates a water cleaning reactor 103 according to a further embodiment of the present invention. The water cleaning reactor 103 has many of the same features as the water cleaning reactor 101, shown in Figures 2a and 2b and like features are awarded the same reference numbers. However, the water cleaning reactor 103 does not comprise the one or more light sources. In the water cleaning reactor 103 the tubular vessel 21 is filled completely with porous magnetic membrane 14 (and the porous magnetic membrane 14 does not have any channel defined therein). There are gaps 41 defined in the tubular support vessel 24, and thus also between the windings of the one or more solenoid coils 11 which are wound around the outer surface 24b of the tubular support vessel 24; these gaps 41 allow for ambient sunlight to be incident on the porous magnetic membrane 14. In this embodiment the support vessel 24 is comprised of a material which is transparent to sunlight (similar to the tubular vessel 21). When sufficient ambient sunlight is incident on the porous magnetic membrane 14 it will cause electric charges to be generated on the surface of said magnetoelectric particles within the porous magnetic membrane 14 which can cause redox reactions to occur which oxidize pollutants in the water. It should be understood that in this water cleaning reactor 103 embodiment, the gaps 41 may be defined by windows provided in the tubular support vessel 24. The tubular support vessel 24 has an outer surface 24b. In another embodiment the tubular support vessel may be defined by a plurality of mechanically independent tubular members and the gaps are defined by the spaces which are provided between these mechanically independent tubular members; for example in the water cleaning reactor the tubular support vessel may be defined by two mechanically independent tubular members; and the gaps are defined by spaces which are provided between these two mechanically independent tubular members.

The solenoid coils 11 are wound around the outer surface 24b of the tubular support vessel 24 (i.e. they do not wind around outer surface 21a of the tubular vessel 21 which is exposed between the solenoid coils. In the water cleaning reactor 103 preferably the solenoid coils 11 each have a diameter in the range between 2 cm-30 cm.

The size of the gaps 41 can be determined by the number of solenoid coils 11 which are wound on the outside surface 24b of the support vessel 24. The number of solenoid coils 11 (N) can range from '1'-'10' preferably, and each solenoid coil has a diameter in the range between 2 cm-30 cm and a length (I) in the range between 0.5 cm-30 cm. Each of the individual solenoid coils have the same length (I). The length (L) of the support vessel 24 can range from 2 cm-100 cm. Thus the size of gaps 41 (x) can be calculated according to the formula x= L-(N×I) cm, wherein 'x' is the size of the gaps 41, L is the length of the support vessel 24, N is the number of solenoid coils, and 'I' is the length of one of the solenoid coils.

During use of the water cleaning reactor 103, polluted water is passed into the water cleaning reactor 103 via the inlet 20. Current is passed through the solenoid coils 11 to cause the generation of a magnetic field; the generated magnetic field acts on the said magnetoelectric particles within the porous magnetic membrane 14 to cause electric charges to be generated on the surface of said magnetoelectric particles, which can cause redox reactions to occur which oxidize pollutants in the water. Additionally, ambient light, passes via the gaps 41, through the transparent support vessel 24 and the transparent tubular vessel 21, to be incident on the porous magnetic membrane 14; the ambient light which is incident on the porous magnetic membrane 14 will cause electric charges to be generated on the surface of said magnetoelectric particles within the porous magnetic membrane 14, which can cause redox reactions to occur, which oxidize pollutants in the water. Additionally, optionally, the ultrasonic transducer 12 can be operated to emit acoustic waves which imparts mechanical stress on the porous magnetic membrane 14, and thus impart mechanical stress on the magnetoelectric particles in the porous magnetic membrane 14; the mechanical stress on the magnetoelectric particles cause the generation of electric charges on the surface of said magnetoelectric particles, which can cause redox reactions to occur which oxidize pollutants in the water. The redox reactions oxidize organic pollutants which may be present in the polluted water, and will reduce the toxicity of toxic heavy metals present in the polluted water to less harmful metals; accordingly the water which is output from outlet 28 of the water cleaning reactor 103 will be of improved quality.

It is important to note that in each of the water cleaning reactors 101, 102, 103 shown in Figures 2a, 2b, 3a, 3b and 4, the magnetic membrane 14 is configured to be porous. During use the polluted water which is to be treated, flows through the magnetic membrane 14 (specifically flows through the pores in the magnetic membrane 14); and as the water flows through the pores in the magnetic membrane 14, the pollutants (e.g. organic pollutants; and/or toxic heavy metals) come into contact with the magnetoelectric particles which are in the magnetic membrane 14; specifically the pollutants (e.g. organic pollutants; and/or toxic heavy metals) come into contact with the electric charges which are on the surface of the magnetoelectric particles, and these electric charges cause redox reactions to occur which oxidize said organic pollutants and/or which cause reduction of toxic metal pollutants to make those metals less toxic.

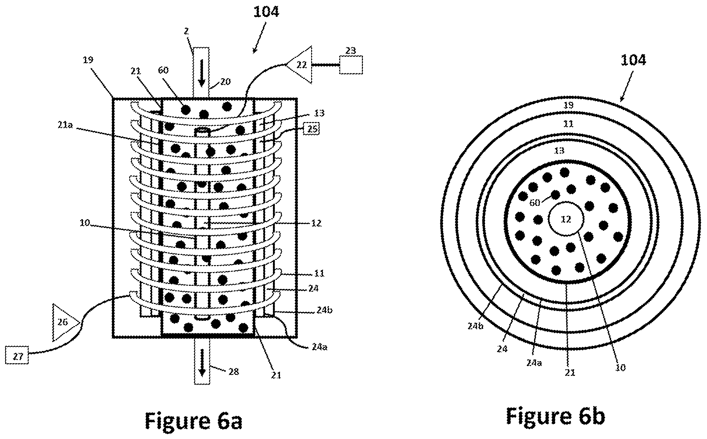

In other embodiments of the water cleaning reactors according to the present invention, instead of the magnetoelectric particles being provided in a magnetic membrane 14, the magnetoelectric particles are provided as mobile magnetoelectric particles (e.g. the magnetoelectric particles may be provided in a solution), which are added to the polluted water to be treated (examples of such embodiments are provided in figures 6-8 and will be described in more detail below). Once added to the polluted water the magnetoelectric particles are free to move within the polluted water and thus the pollutants (e.g. organic pollutants; and/or toxic heavy metals) can come into contact with the magnetoelectric particles; specifically the pollutants (e.g. organic pollutants; and/or toxic heavy metals) come into contact with the electric charges which are on the surface of the magnetoelectric particles, and these electric charges cause redox reactions to occur which oxidize said organic pollutants and/or which cause reduction of toxic metal pollutants to make those metals less toxic.

In each of the water cleaning reactors 101, 102, and 103 shown in Figures 2a, 2b, 3a, 3b and 4, the porous magnetic membrane 14 may comprise a matrix material having the magnetoelectric particles embedded in the matrix material. The matrix material may comprise any suitable polymer. For example the matrix material may comprise any one or more of polydimethylsiloxane, polylactic acid, poly(vinylidene fluoride-co-trifluoroethylene), cellulose, polypyrrole, polystyrene, polypropylene, polyethylene, nylon, polyvinyl chloride, acrylonitrile butadiene styrene. The matrix material having the magnetoelectric particles embedded in the matrix material may be formed by adding a solution comprising the matrix material and the magnetoelectric particles, to a template material (the template material can comprise, sugar, salt crystals, gelatin particles, aluminium oxide, zinc oxide, copper oxide, calcium oxide, calcium hydroxide, calcium carbonate, titanium dioxide, polycarbonate, poly(vinylidene fluoride), polystyrene, positive and negative photoresists, cellulose acetate, cellulose ester etc.; then removing the template material (e.g. by dissolving the template material). In other words the porous magnetic membrane 14 may be formed by way of a template-assisted infiltration of magnetoelectric particles.

One exemplary method to form the porous magnetic membrane 14 used in the present invention, by way of a template-assisted deposition of magnetoelectric particles, with polydimethylsiloxane, where sugar cubes acted as the sacrificial template, includes the following steps:
1. Porous polydimethylsiloxane sponge-like membranes were fabricated using template-assisted infiltration of polydimethylsiloxane-magnetoelectric particle solution inside a sugar template via sugar leaching. White and brown sugar crystals were filtered through a sieve (100 µm- 1 mm pore size) in order to collect sugar cubes with a homogeneous size.
2. 1 mL of deionized water was added to 100 g of filtered sugar under ambient conditions and mixed thoroughly. These wet sugar crystals was then immediately poured into a mould of choice. In our case, we chose plastic moulds and heated them at 110 °C in an oven for 4 h in order to completely evaporate all the water and to obtain a dry and compact sugar mould.
3. Next, a desired quantity of magnetoelectric particles were added to a polydimethylsiloxane pre-polymer resin and thoroughly mixed using an ultrasonic transducer tip until a homogeneous mixture without any agglomerates was obtained. Various magnetoelectric particle concentrations were explored, from 1 % to 10 wt%.
4. Then, to this mixture, a 10 w/w % of polydimethylsiloxane curing agent was added and stirred manually with a plastic spatula.
5. This polydimethylsiloxane-magnetoelectric particle solution was manually poured into the sugar mould and the samples were then placed inside a vacuum chamber for 1 h (or until no more bubbles could be seen in the resin) to ensure a complete infiltration of the resin inside the sugar template.
6. These infiltrated samples were then heated to 80 °C in an oven for 1 h in order to cure the polydimethylsiloxane.
7. After this, the cured polydimethylsiloxane - magnetoelectric moulds were removed from the plastic containers and were immersed into deionized -water until all of the sugar template was completely dissolved.
8. Finally, the resulting porous polydimethylsiloxane - magnetoelectric membranes were dried in an oven at 80 °C for 2 hours.

In each of the water cleaning reactors 101, 102, and 103 shown in Figures 2a, 2b, 3a, 3b and 4, the porous magnetic membrane 14 may comprise a freeze-dried mixture of a polymer solution and the magnetoelectric particles. The polymer solution may comprise any suitable polymer material including one or more of the following polymers: cellulose, polylactic acid, poly(vinylidene fluoride), poly(lactic-co-glycolic acid), polyvinyl alcohol, polydimethylsiloxane, polypyrrole, polystyrene, polypropylene, polyethylene, polyethylene glycol, nylon, polyvinyl chloride, Teflon, fibrin, hyaluronic acid, acrylonitrile butadiene styrene etc., provided in any of the suitable solvents including one of the following solvents: water, acetone, ethanol, methanol, isapropanol, chloroform, acetic acid, formic acid, dimethylformamide, dimethylsulfoniopropionate, tetrahydrofuran, dimethylacetamide etc.

One exemplary method to form the porous magnetic membrane 14 used in the present invention, by way of dispersing cellulose in deionised water and citric acid, followed by freeze-dying this solution to obtain porous magnetic membrane 14, includes the following steps:
1. 0.75 w/v % of citric acid was dissolved in deionized water using magnetic stirring at room temperature.
2. 5 w/v % of 2-hydroxyethyl cellulose was added to the above solution under magnetic stirring for 1 h until the solution turned viscous.
3. The desired amount of magnetoelectric particles were added to the above solution and a homogeneous mixture was achieved using an ultrasonic tip for 1 h.
4. The above, well-mixed solution was then placed on a shaker for 1 h in order to obtain highly viscous mixture of cellulose with magnetoelectric particles.
5. Next, this well mixed and viscous solution was frozen at - 80 °C overnight, followed by freeze-drying the frozen sample in a lyophilizer for 48 h.
6. The resulting dried, aerogel was heated in an electric oven at 80 °C for 8 h in order to induce the cross-linking reaction of the cellulose.

In each of the water cleaning reactors 101, 102, and 103 shown in Figures 2a, 2b, 3a, 3b and 4, the magnetoelectric particles were provided as part of a porous magnetic membrane 14; however it should be understood that it is not essential to the present invention that the magnetoelectric particles were provided as part of a porous magnetic membrane 14. In another embodiment of the present invention the magnetoelectric particles are provided in the water cleaning reactors as independent, mobile, particles. Figures 6a, 6b, 7a, 7b and 8, illustrate water cleaning reactors wherein the magnetoelectric particles are provided as independent, mobile, particles. In these embodiments of the water cleaning reactors according to the present invention, the magnetoelectric particles are provided as mobile magnetoelectric particles (e.g. the magnetoelectric particles may be provided in a solution), which are added to the polluted water to be treated. Once added to the polluted water the magnetoelectric particles are free to move within the polluted water and thus the pollutants (e.g. organic pollutants; and/or toxic heavy metals) can come into contact with the magnetoelectric particles; specifically the pollutants (e.g. organic pollutants; and/or toxic heavy metals) come into contact with the electric charges which are on the surface of the magnetoelectric particles, and these electric charges cause redox reactions to occur which oxidize said organic pollutants and/or which cause reduction of toxic metal pollutants to make those metals less toxic.

Figures 6a illustrates a longitudinal section view of the water cleaning reactor 104 while Figure 6b provides a cross section view of the water cleaning reactor 104 according to a further embodiment of the present invention. The water cleaning reactor 104 has many of the same features as the water cleaning reactor 101 shown in Figures 2a and 2b and like features are awarded the same reference numbers. In the water cleaning reactor 104 there is no porous magnetic membrane 14; instead the inside of the tubular vessel 21 is filled with a solution which contains magnetoelectric particles 60. The magnetoelectric particles 60 are unconstrained and are free to move within the tubular vessel 21. The magnetoelectric particles 60 provided in the water cleaning reactor 104 may comprise any of the above-mentioned magnetoelectric particles.

During use the water cleaning reactor 104 operates in a similar manner to the water cleaning reactor 101 of Figures 2a,b; however since the magnetoelectric particles 60 are unconstrained and are free to move within the tubular vessel 21, when the polluted water is passed through the water cleaning reactor 104 (specifically when it passes through the tubular vessel 21) the magnetoelectric particles 60 will mix into the water; thus the water which is output from outlet 28 of the water cleaning reactor 104 will contain some the magnetoelectric particles 60. Accordingly, an additional step of removing the magnetoelectric particles 60 from the water which is output 28 from the water cleaning reactor 104 is carried out.

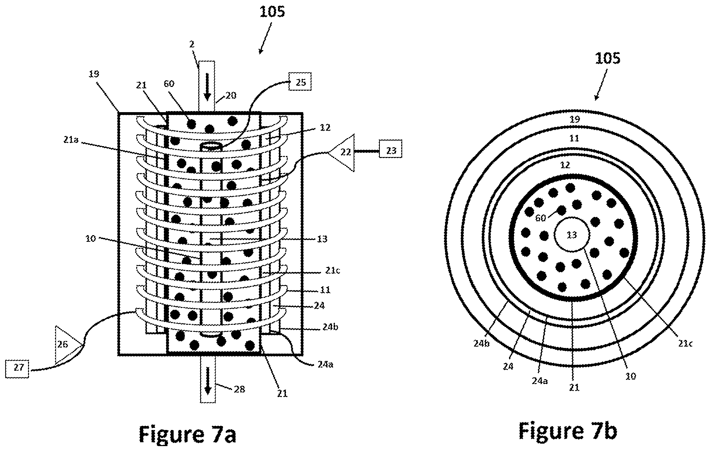

Figures 7a illustrates a longitudinal section view of the water cleaning reactor 105 while Figure 7b provides a cross section view of the water cleaning reactor 105 according to a further embodiment of the present invention. The water cleaning reactor 105 has many of the same features as the water cleaning reactor 102 shown in Figures 3a and 3b and like features are awarded the same reference numbers. In the water cleaning reactor 105 there is no porous magnetic membrane 14; instead the inside of the tubular vessel 21 is filled with a solution which contains magnetoelectric particles 60. The magnetoelectric particles 60 are unconstrained and are free to move within the tubular vessel 21. The magnetoelectric particles 60 provided in the water cleaning reactor 105 may comprise any of the above-mentioned magnetoelectric particles.

During use the water cleaning reactor 105 operates in a similar manner to the water cleaning reactor 102 of Figures 3a,b; however since the magnetoelectric particles 60 are unconstrained and are free to move within the tubular vessel 21, when the polluted water is passed through the water cleaning reactor 105 (specifically when the polluted water passes through the tubular vessel 21) the magnetoelectric particles 60 will mix into the water; thus the water which is output 28 from the water cleaning reactor 105 will contain some the magnetoelectric particles 60. Accordingly, an additional step of removing the magnetoelectric particles 60 from the water which is output 28 from the water cleaning reactor 105 is subsequently carried out.

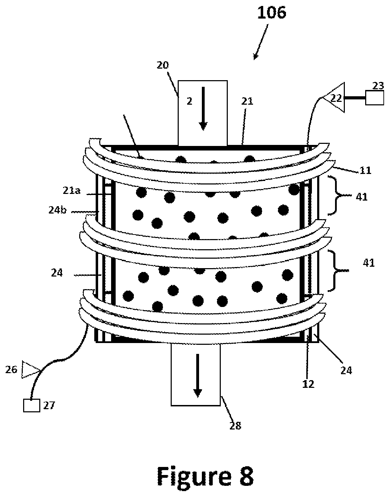

Figure 8 illustrates a water cleaning reactor 106 according to a further embodiment of the present invention. The water cleaning reactor 106 has many of the same features as the water cleaning reactor 103 shown in Figure 4 and like features are awarded the same reference numbers. In the water cleaning reactor 106 there is no porous magnetic membrane 14; instead the inside of the tubular vessel 21 is filled with a solution which contains magnetoelectric particles 60. The magnetoelectric particles 60 are unconstrained and are free to move within the tubular vessel 21. The magnetoelectric particles 60 provided in the water cleaning reactor 106 may comprise any of the above-mentioned magnetoelectric particles.

During use the water cleaning reactor 106 operates in a similar manner to the water cleaning reactor 103 of Figures 4; however since the magnetoelectric particles 60 are unconstrained and are free to move within the tubular vessel 21, when the polluted water is passed through the water cleaning reactor 106 (specifically when it passes through the tubular vessel 21) the magnetoelectric particles 60 will mix into the water; thus the water which is output from the outlet 28 of the water cleaning reactor 106 will contain some the magnetoelectric particles 60. Accordingly, an additional step of removing the magnetoelectric particles 60 from the water which is output from outlet 28 of the water cleaning reactor 106 is carried out.

According to a further aspect of the present invention there is provided assemblies each of which can be used to implement any of the above-mentioned methods for cleaning polluted water. Said assemblies each use any one the afore-mentioned water cleaning reactors 101, 102, 103, 104, 105 and 106.

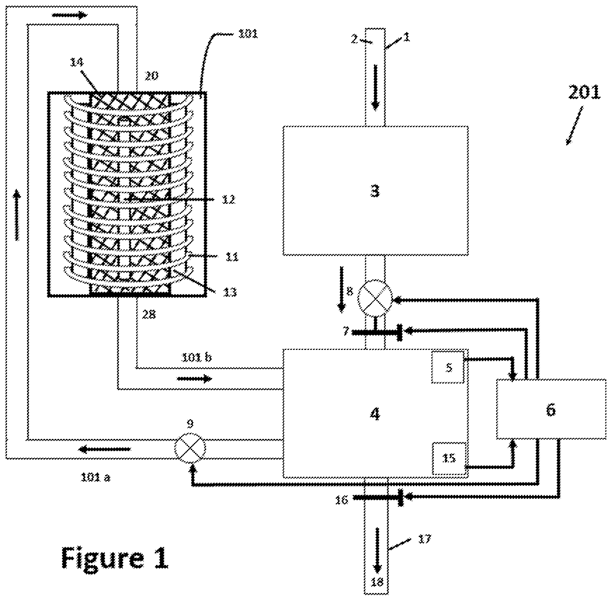

Figure 1 shows a water cleaning assembly 201 according to a first embodiment. The assembly 201 comprises the water cleaning reactor of Figures 2a and 2b.

Referring to Figure 1, the water cleaning assembly 201 comprises, a reservoir 3 which can store polluted water 2 which is to be treated (preferably the reservoir 3 is constructed from stainless steel, and is configured to have a volume in the range 1-1000 litres); a circulation tank 4 which can be selectively fluidly connected to the reservoir 3 (preferably the circulation tank 4 is constructed from stainless steel, and is configured to have a volume in the range 1-100 litres); a first valve 7 which is fluidly connected between the reservoir 3 and circulation tank 4, wherein the first valve 7 can be selectively arranged in an open position or closed position, wherein when the first valve 7 is in its open position, polluted water stored in the reservoir 3 can flow into the circulation tank 4, and when the first valve 7 is in its closed position, polluted water stored in the reservoir 3 is blocked from flowing into the circulation tank 4; a first pump 8 which, when operated, can assist the flow of polluted water stored in the reservoir 3 into the circulation tank 4.

The water cleaning assembly 201 further comprises a water cleaning reactor 101 of figures 2a,b; the water cleaning reactor 101 can be can be selectively fluidly connected to the circulation tank 4. A first conduit 101a fluidly connects the circulation tank 4 to the inlet 20 of the water cleaning reactor 101; and a second conduit 101b fluidly connects the outlet 28 of the water cleaning reactor 101 to the circulation tank 101a. A second pump 9 is provided along the first conduit 101a between the inlet 20 of the water cleaning reactor and the circulation tank 4; the second pump 9 can be selectively operated to pump fluid along the first conduit 101a; thus when operated, the second pump 9 can assist the flow of polluted water stored from the circulation tank 4 into the water cleaning reactor 101.

The circulation tank 4 further comprises an output conduit 17; a second valve 16 is provided on the output conduit 17. The second valve 16 can be selectively arranged in an open position or closed position, wherein when the second valve 16 is in its open position fluid can flow out of the circulation tank 4, and when the second valve 16 is in its closed position, fluid in the circulation tank 4 is blocked from flowing out of the circulation tank 4.

The water cleaning assembly 201 further comprises a first sensor 5 and a second sensor 15. The first sensor 5 is configured to sense the volume/level of fluid in the circulation tank 4; the first sensor 5 may be, for example, an ultrasonic level transmitter or laser level transmitter. The second sensor 15 is configured to sense the level of pollution in the fluid in the circulation tank 4 (for example the second sensor 15 may be configured to sense the amount of pollutants (e.g. organic carbon) present in water which has passed through the water cleaning reactor 101 and has been received, via the second conduit 101b, back into the circulation tank 4). The second sensor 15 may take any suitable form, for example the second sensor 15 may be total organic carbon analyser. In this embodiment the first and second sensors 5, 15 are located within the circulation tank 4.

The water cleaning assembly 201 further comprises a controller 6 which is operably connected to the first valve 7, the second valve 16, the first pump 8, the second pump 9, and to the first and second sensors 5, 15. The controller 6 is configured to operate the opening and closing of the first and second valve 7, 16, and to control the operation of the first and second pumps 8, 9, based on sensing information provided by the first and second sensors 5, 15.

During use of the water cleaning assembly 201, polluted water (e.g. water containing organic pollutants) is collected and stored in the reservoir 3. The first valve 7 is set to its open position and the first pump 8 is operated so that the polluted water flows from the reservoir 3 into the circulation tank 4. Preferably the first pump 8 is configured to pump the polluted water with a force such that the polluted water flows from the reservoir 3 into the circulation tank 4 at a rate of 10-100 mL/min. The first sensor 5 senses the level/volume of polluted water in the circulation tank 4, and once the first sensor 5 senses that the level/volume reaches a predefined level/volume then the controller 6 turns off the first pump 8 and moves the first valve 7 to its closed position. The controller 6 then turns on the second pump 9 so that the polluted water in the circulation tank 4 is pumped to the water cleaning reactor 101. Most preferably the second pump 9 is configured to pump the polluted water with a force such that the polluted water flows through the water cleaning reactor 101 at a predefined rate (or at a rate which is within a predefined range of flow rate). Most preferably the second pump 9 is configured to pump the polluted water with a force such that the polluted water flows through the water cleaning reactor 101 at a rate of 10-20 mL/min.

The water cleaning reactor 101 is operated in the same manner as already described with respect to figures 2a,b to clean the water. Specifically, the current is passed through the solenoid coils 11 to cause the generation of a magnetic field; the generated magnetic field acts on the said magnetoelectric particles within the porous magnetic membrane 14 to cause electric charges to be generated on the surface of said magnetoelectric particles, which can cause redox reactions to occur which oxidize pollutants in the water. Additionally, optionally, the one or more light sources 13 may be operated to exhibit light; the exhibited light is incident on the porous magnetic membrane 14; the light which is incident on the porous magnetic membrane 14 it will cause electric charges to be generated on the surface of said magnetoelectric particles within the porous magnetic membrane 14, which can cause redox reactions to occur which oxidize pollutants in the water. Additionally, optionally, the ultrasonic transducer 12 can be operated to emit acoustic waves which impart mechanical stress on the porous magnetic membrane 14, and thus impart mechanical stress on the magnetoelectric particles in the porous magnetic membrane 14; the mechanical stress on the magnetoelectric particles cause the generation of electric charges on the surface of said magnetoelectric particles, which can cause redox reactions to occur which oxidize pollutants in the water. The redox reactions oxidize organic pollutants which may be present in the polluted water, and will reduce the toxicity of toxic heavy metals present in the polluted water to less harmful metals; accordingly the water which is output from outlet 28 of the water cleaning reactor 101 will be of improved quality (i.e. contain less pollutants).

The treated water which is output from the outlet 28 of the water cleaning reactor 101 will flow, via the second conduit 101b, to the circulation tank 4. The second sensor 15 senses the level of pollution in the treated water in the circulation tank 4 (e.g. senses the amount of organic carbon remaining in the treated water); if the second sensor 15 senses that level of pollution is above a predefined threshold level the control 6 will turn on the second pump 9 so that the treated water is passed once again to the water cleaning reactor 101 where it will be treated again. These steps are repeated until the second sensor 15 senses the level of pollution in the treated water in the circulation tank 4 is less than the predefined threshold level.

Once the second sensor 15 senses the level of pollution in the treated water in the circulation tank 4 is less than the predefined threshold level, the controller 6 then opens the second valve 16 so that the treated water (which has an acceptable level of pollution) which is present in the circulation tank 4, is output from the water cleaning assembly 201 via the output conduit 17.

It should be understood that in the water cleaning assembly 201 of Figure 1, the water cleaning reactor 101, circulation tank 4, first senor 5; second pump 9; and the controller 6, are the only essential features of the invention. The water cleaning assembly 201 can achieve its technical effect of cleaning polluted water using only these features; the other features of the water cleaning assembly 201 described are optional.

For conciseness the present description describes the water cleaning assembly 201 having the water cleaning reactor 101 of Figures 2a,b; however it should be understood that the water cleaning assembly 201 may comprise any of the water cleaning reactor embodiments described in this application. For example the water cleaning assembly 201 may comprise any one or more of, the water cleaning reactor 102 of Figures 3a,b, and/or the water cleaning reactor 103 of Figure 4. It should be understood that the water cleaning assembly 201 comprising any of said afore-mentioned water cleaning reactor embodiments, will operate in a similar manner to that described above with respect to Figure 1. Also it should be understood that the water cleaning assembly 201 may comprise a plurality of water cleaning reactors.

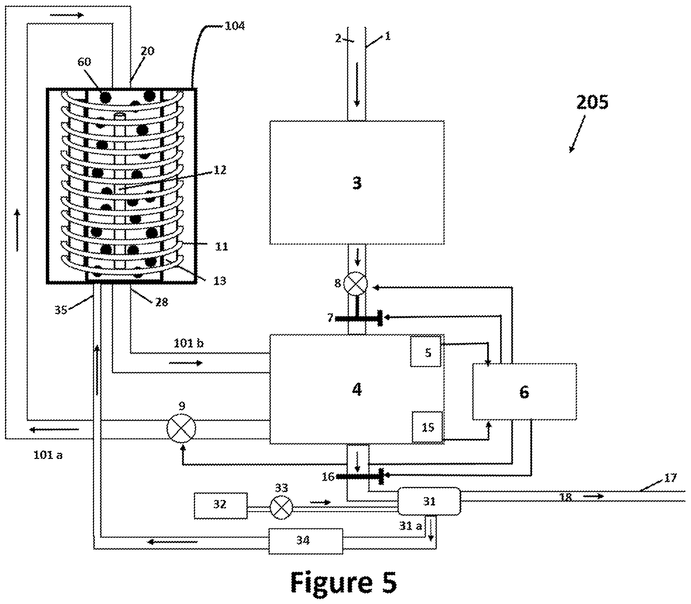

Figure 5 shows a water cleaning assembly 204 according to a further embodiment of the present invention. The assembly 204 comprises the water cleaning reactor of Figure 6.

Referring to Figure 5, the water cleaning assembly 204 comprises many of the same features as the water cleaning assembly 201 of Figure 1 and like features are awarded the same reference numbers. Importantly, the water cleaning assembly 204 comprises the water cleaning reactor 105 of figure 6 (instead of the water cleaning reactor 102).

The water cleaning assembly 204 further comprises high-gradient magnetic separator 31 which is fluidly connected between the second valve 16 and the output conduit 17. The high-gradient magnetic separator 31 is fluidly connected to the water cleaning reactor 104; a recycling reactor 34 is further provided between the high-gradient magnetic separator 31 and the water cleaning reactor 104, an input of the recycling reactor 34 being fluidly connected to a first output 31a of the high-gradient magnetic separator 31, and an output of the recycling reactor 34 being fluidly connected to the water cleaning reactor 104.

The water cleaning assembly 204 further comprises a second reservoir 31 which contains clean water; and a third pump 33 which is fluidly connected between the high-gradient magnetic separator 31 and a second reservoir 32, and which can be selectively operate to pump clean water from the second reservoir 32 into the high-gradient magnetic separator 31.

During use of the water cleaning assembly 204, polluted water (e.g. water containing organic carbon) is collected and stored in the reservoir 3. The first valve 7 is set to its open position and the first pump 8 is operated so that the polluted water flows from the reservoir 3 into the circulation tank 4. Preferably the first pump 8 is configured to pump the polluted water with a force such that the polluted water flows from the reservoir 3 into the circulation tank 4 at a rate of 10-100 mL/min. The first sensor 5 senses the level/volume of polluted water in the circulation tank 4, and once the first sensor 5 senses that the level/volume reaches a predefined level/volume then the controller 6 turns off the first pump 8 and moves the first valve 7 to its closed position. The controller 6 then turns on the second pump 9 so that the polluted water in the circulation tank 4 is pumped to the water cleaning reactor 104. Most preferably the second pump 9 is configured to pump the polluted water with a force such that the polluted water flows through the water cleaning reactor 104 at a predefined rate (or at a rate which is within a predefined range of flow rate). Most preferably the second pump 9 is configured to pump the polluted water with a force such that the polluted water flows through the water cleaning reactor 104 at a rate of 10-20 mL/min.

The water cleaning reactor 104 is operated in the same manner as already described with respect to figure 6 to clean the water. Since the magnetoelectric particles in the water cleaning reactor 104 are added to the polluted water as it passed through the water cleaning reactor 105, the magnetoelectric particles will be present in the treated water which is output 28 from the water cleaning reactor 104, and passed to the circulation tank 4.

The treated water which is output from outlet 28 of the water cleaning reactor 104 will flow, via the second conduit 101b, to the circulation tank 4. The second sensor 15 senses the level of pollution in the treated water in the circulation tank 4 (e.g. senses the amount of organic carbon remaining in the treated water); if the second sensor 15 senses that level of pollution is above a predefined threshold level the control 6 will turn on the second pump 9 so that the treated water is passed once again to the water cleaning reactor 104 where it will be treated again. These steps are repeated until the second sensor 15 senses the level of pollution in the treated water in the circulation tank 4 is less than the predefined threshold level.

Once the second sensor 15 senses the level of pollution in the treated water in the circulation tank 4 is less than the predefined threshold level, the controller 6 then opens the second valve 16 so that the treated water (which has an acceptable level of pollution) which is present in the circulation tank 4, is passed to the high-gradient magnetic separator 31.

The high-gradient magnetic separator 31 is then operated to extract the magnetoelectric particles which are present in the treated water. High-gradient magnetic separators are widely used for magnetic particle separation. They operate by combining an external magnetic field, generated by an electromagnet, and a magnetic matrix material such as steel wool. This magnetic matrix material is capable of generating high magnetic field gradients and providing a surface to trap magnetic particles when they pass through the matrix material. Once the high-gradient magnetic separator 31 has extracted the magnetoelectric particles from the treated water the treated water is then output from the water cleaning assembly 204 via the output conduit 17.

The magnetoelectric particles which the high-gradient magnetic separator 31 extracted are then cleaned and passed back to the water cleaning reactor 104 for reuse. Specifically, the magnetic field inside magnetic separator is turned off and magnetoelectric particles are collected by using the third pump 33 to pump clean water from the second reservoir 33 into the high-gradient magnetic separator 31. This clean water flushes the magnetoelectric particles present in the high-gradient magnetic separator 31 (i.e. the magnetoelectric particles which the high-gradient magnetic separator 31 extracted from the treated water) into the recycling reservoir 34 via the first output 31a of the high-gradient magnetic separator 31. The magnetoelectric particles are cleaned in the recycling reservoir 34, and are then passed from the recycling reservoir 34 back to the water cleaning reactor 104 for reuse.

It should be understood that in the water cleaning assembly of figure 5, only the water cleaning reactor 104, circulation tank 4, first senor 5; second pump 9; the controller 6, and high-gradient magnetic separator 31 are the only essential features of the invention. The water cleaning assembly 204 can achieve its technical effect of cleaning polluted water using only these features; the other features of the water cleaning assembly 204 described are optional.

For conciseness the present description describes the water cleaning assembly 204 having the water cleaning reactor 104 of Figure 6; however it should be understood that the water cleaning assembly 204 may comprise any of the water cleaning reactor embodiments described in this application. For example the water cleaning assembly 204 may comprise any one or more of, the water cleaning reactor 105 of Figure 7, and/or the water cleaning reactor 106 of Figure 8. It should be understood that the water cleaning assembly 204 comprising any of said afore-mentioned water cleaning reactor embodiments, will operate in a similar manner to that described above with respect to Figure 5. Also it should be understood that the water cleaning assembly 204 may comprise a plurality of water cleaning reactors.

Various modifications and variations to the described embodiments of the invention will be apparent to those skilled in the art without departing from the scope of the invention as defined in the appended claims. Although the invention has been described in connection with specific preferred embodiments, it should be understood that the invention as claimed should not be unduly limited to such specific embodiment.

## Claims

1. A method for treating water containing pollutants, the method comprising the steps of,
bringing said water in contact with magnetoelectric particles which are located inside a tubular vessel (21) of a water cleaning reactor (101,102, 103), so that the pollutants in the water come into contact with the surfaces of magnetoelectric particles (60);
applying an alternating magnetic field to the magnetoelectric particles so as to generate electric charges on the surface of said magnetoelectric particles, wherein said electric charges on the surface of said magnetoelectric particles cause redox reactions to occur which degrade said pollutants in the water, wherein said alternating magnetic field is generated by one or more coils (11) which are wound around the vessel (21);
wherein each of said magnetoelectric particles comprise a magnetostrictive material and piezoelectric material, wherein said magnetoelectric particles comprise a plurality of magnetostrictive layers each magnetostrictive layer coated by a respective piezoelectric coating, and/or, said magnetoelectric particles comprise a magnetostrictive core embedded in a piezoelectric matrix, and/or said magnetoelectric particles comprise a magnetostrictive core coated with a piezoelectric coating.

2. A method according to claim 1 wherein the step of bringing said water in contact with said magnetoelectric particles, comprises, adding magnetoelectric particles to said water.

3. A method according to claim 1 wherein the step of bringing said water in contact with said magnetoelectric particles, comprises, passing the water through a porous membrane which comprises said magnetoelectric particles.

4. A method according to any one of claims 1 -3, wherein said pollutants comprise organic pollutants, and wherein said electric charges on the surface of said magnetoelectric particles cause redox reactions to occur which oxidize said organic pollutants; and/or
wherein said pollutants comprise toxic heavy metals, and wherein said electric charges on the surface of said magnetoelectric particles cause redox reactions to occur which reduce and/or oxidize said metals to less harmful metals, thereby lowering the toxicity of said metals.

5. A method according to claims 2, wherein the step of adding magnetoelectric particles to said water comprises adding a dosage of magnetoelectric particles in the range 0.1 mg/mL-20 mg/mL to said water.

6. A method according to any one of claims 1-5, wherein the step of applying a magnetic field to the magnetoelectric particles comprises applying a magnetic field of 0.1 mT-50 mT to the magnetoelectric particles.

7. A method according to any one of claims 1-6, wherein the step of applying a magnetic field to the magnetoelectric particles comprises applying a magnetic field having a frequency of 0.1 kHz-10 kHz to the magnetoelectric particles.

8. A method according to any one of claims 1-7, wherein the step of applying a magnetic field to the magnetoelectric particles comprises applying the magnetic field for a period of 1-5 hours.

9. A method according to claim 2, and according to any one of claims 4-9 when dependent on claim 2, further comprising the step of collecting said magnetoelectric particles from said water using a magnet.

10. A method according to claim 9, wherein the method further comprises washing said collected magnetoelectric particles with deionised water and/or ethanol, drying said washed magnetoelectric particles, and repeating the steps of claim 1 using said dried magnetoelectric particles.

11. A water cleaning reactor (101, 102, 103), which is suitable for use to carry out a method according to any one of claims 1-10, the water cleaning reactor (101, 102, 103) comprising,
a tubular vessel (21) which can receive water containing pollutants;
magnetoelectric particles (60), which are located inside a tubular vessel (21), wherein each of said magnetoelectric particles comprise a magnetostrictive material and piezoelectric material, wherein said magnetoelectric particles comprise a plurality of magnetostrictive layers each magnetostrictive layer coated by a respective piezoelectric coating, and/or, said magnetoelectric particles comprise a magnetostrictive core embedded in a piezoelectric matrix, and/or said magnetoelectric particles comprise a magnetostrictive core coated with a piezoelectric coating;
one or more coils (11) which are conducting current so that the one or more coils (11) are generating an alternating magnetic field, wherein said one or more coils (11) are wound around the vessel (21) and are arranged with respect to the magnetoelectric particles such that the magnetoelectric particles are submersed in said alternating magnetic field so that the alternating magnetic field is generating electric charges on the surface of said magnetoelectric particles, wherein said electric charges on the surface of said magnetoelectric particles cause redox reactions to occur which degrade said pollutants in the water.

12. A water cleaning reactor according to claim 11 wherein the magnetoelectric particles are provided in a porous membrane (14).

13. A water cleaning reactor according to claim 11 wherein the magnetoelectric particles are provided in a solution which can be mixed with polluted water which is to be treated.

14. A water cleaning reactor according to claim 11 or 12, further comprising an ultrasonic transducer (12) which can be selectively operated to emit acoustic waves which impart mechanical stress on the magnetoelectric particles; and/or further comprising a light source (13) which can be selectively operated to emit light which is incident on the magnetoelectric particles.

15. A water cleaning assembly (201) comprising,
a water cleaning reactor (101) according to any one of claims 11-14;
a circulation tank (4) which is fluidly connected to the water cleaning reactor, such that fluid can flow from the circulation tank to the water cleaning reactor, and such that fluid which has flowed through the water cleaning reactor can flow into the circulation tank;
a sensor (5) which is configured to sense the level of pollution in a fluid contained in the circulation tank;
a pump (9) which can pump fluid from the circulation tank to the water cleaning reactor;
a controller (6) which is configured to operate the pump to pump fluid from the circulation tank to the water cleaning reactor if the sensor detects that the level of pollution in said fluid is above a predefined level.

## Patentansprüche

1. Verfahren zur Behandlung von schadstoffhaltigem Wasser, wobei das Verfahren die folgenden Schritte umfasst:
In-Kontakt-Bringen des Wassers mit magnetoelektrischen Teilchen, die sich im Inneren eines rohrförmigen Behälters (21) eines Wasserreinigungsreaktors (101, 102, 103) befinden, so dass die Schadstoffe im Wasser mit den Oberflächen der magnetoelektrischen Teilchen (60) in Kontakt kommen;
Anlegen eines magnetischen Wechselfeldes an die magnetoelektrischen Teilchen zum Erzeugen von elektrischen Ladungen auf der Oberfläche der magnetoelektrischen Teilchen, wobei die elektrischen Ladungen auf der Oberfläche der magnetoelektrischen Teilchen Redoxreaktionen bewirken, die die Schadstoffe im Wasser abbauen, wobei das magnetische Wechselfeld durch eine oder mehrere Spulen (11) erzeugt wird, die um den Behälter (21) gewickelt sind;
wobei jedes der magnetoelektrischen Teilchen ein magnetostriktives Material und ein piezoelektrisches Material umfasst, wobei die magnetoelektrischen Teilchen eine Vielzahl von magnetostriktiven Schichten umfassen, wobei jede magnetostriktive Schicht mit einer jeweiligen piezoelektrischen Beschichtung beschichtet ist, und/oder die magnetoelektrischen Teilchen einen magnetostriktiven Kern umfassen, der in eine piezoelektrische Matrix eingebettet ist, und/oder die magnetoelektrischen Teilchen einen magnetostriktiven Kern umfassen, der mit einer piezoelektrischen Beschichtung beschichtet ist.

2. Verfahren nach Anspruch 1, wobei der Schritt, das Wasser mit den magnetoelektrischen Teilchen in Kontakt zu bringen, das Zugeben von magnetoelektrischen Teilchen zum Wasser umfasst.

3. Verfahren nach Anspruch 1, wobei der Schritt, das Wasser mit den magnetoelektrischen Teilchen in Kontakt zu bringen, das Durchleiten des Wassers durch eine poröse Membran umfasst, die die magnetoelektrischen Teilchen umfasst.

4. Verfahren nach einem der Ansprüche 1 bis 3, wobei die Schadstoffe organische Schadstoffe umfassen und wobei die elektrischen Ladungen auf der Oberfläche der magnetoelektrischen Teilchen Redoxreaktionen bewirken, die die organischen Schadstoffe oxidieren; und/oder wobei die Schadstoffe toxische Schwermetalle umfassen und wobei die elektrischen Ladungen auf der Oberfläche der magnetoelektrischen Teilchen Redoxreaktionen hervorrufen, die die Metalle zu weniger schädlichen Metallen reduzieren und/oder oxidieren, wodurch die Toxizität der Metalle verringert wird.

5. Verfahren nach Anspruch 2, wobei der Schritt des Zugebens von magnetoelektrischen Teilchen zum Wasser das Zugeben einer Dosierung von magnetoelektrischen Teilchen im Bereich von 0,1 mg/mL bis 20 mg/mL zum Wasser umfasst.

6. Verfahren nach einem der Ansprüche 1 bis 5, wobei der Schritt des Anlegens eines Magnetfeldes an die magnetoelektrischen Teilchen das Anlegen eines Magnetfeldes von 0,1 mT bis 50 mT an die magnetoelektrischen Teilchen umfasst.

7. Verfahren nach einem der Ansprüche 1 bis 6, wobei der Schritt des Anlegens eines Magnetfeldes an die magnetoelektrischen Teilchen das Anlegen eines Magnetfeldes mit einer Frequenz von 0,1 kHz bis 10 kHz an die magnetoelektrischen Teilchen umfasst.

8. Verfahren nach einem der Ansprüche 1 bis 7, wobei der Schritt des Anlegens eines Magnetfeldes an die magnetoelektrischen Teilchen das Anlegen des Magnetfeldes über einen Zeitraum von 1 bis 5 Stunden umfasst.

9. Verfahren nach Anspruch 2 und nach einem der Ansprüche 4 bis 9 bei Abhängigkeit von Anspruch 2, ferner umfassend den Schritt des Sammelns der magnetoelektrischen Teilchen aus dem Wasser unter Verwendung eines Magneten.

10. Verfahren nach Anspruch 9, wobei das Verfahren ferner das Waschen der gesammelten magnetoelektrischen Teilchen mit entionisiertem Wasser und/oder Ethanol, das Trocknen der gewaschenen magnetoelektrischen Teilchen und das Wiederholen der Schritte nach Anspruch 1 unter Verwendung der getrockneten magnetoelektrischen Teilchen umfasst.

11. Wasserreinigungsreaktor (101, 102, 103), der zum Durchführen eines Verfahrens nach einem der Ansprüche 1 bis 10 geeignet ist, wobei der Wasserreinigungsreaktor (101, 102, 103) folgende Elemente umfasst:
einen rohrförmigen Behälter (21), der schadstoffhaltiges Wasser aufnehmen kann;
magnetoelektrische Teilchen (60), die sich im Inneren eines rohrförmigen Behälters (21) befinden, wobei jedes der magnetoelektrischen Teilchen ein magnetostriktives Material und ein piezoelektrisches Material umfasst, wobei die magnetoelektrischen Teilchen eine Vielzahl von magnetostriktiven Schichten umfassen, wobei jede magnetostriktive Schicht mit einer jeweiligen piezoelektrischen Beschichtung beschichtet ist, und/oder die magnetoelektrischen Teilchen einen magnetostriktiven Kern umfassen, der in eine piezoelektrische Matrix eingebettet ist, und/oder die magnetoelektrischen Teilchen einen magnetostriktiven Kern umfassen, der mit einer piezoelektrischen Beschichtung beschichtet ist;
eine oder mehrere Spulen (11), die Strom leiten, so dass die eine oder die mehreren Spulen (11) ein magnetisches Wechselfeld erzeugen, wobei die eine oder die mehreren Spulen (11) um den Behälter (21) gewickelt sind und in Bezug auf die magnetoelektrischen Teilchen derart angeordnet sind, dass die magnetoelektrischen Teilchen in das magnetische Wechselfeld eingetaucht sind, so dass das magnetische Wechselfeld elektrische Ladungen auf der Oberfläche der magnetoelektrischen Teilchen erzeugt, wobei die elektrischen Ladungen auf der Oberfläche der magnetoelektrischen Teilchen Redoxreaktionen bewirken, die die Schadstoffe im Wasser abbauen.

12. Wasserreinigungsreaktor nach Anspruch 11, wobei die magnetoelektrischen Teilchen in einer porösen Membran (14) bereitgestellt sind.

13. Wasserreinigungsreaktor nach Anspruch 11, wobei die magnetoelektrischen Teilchen in einer Lösung bereitgestellt werden, die mit dem zu behandelnden verschmutzten Wasser gemischt werden kann.

14. Wasserreinigungsreaktor nach Anspruch 11 oder 12, ferner umfassend einen Ultraschallwandler (12), der selektiv zum Aussenden von akustischen Wellen betrieben werden kann, die die magnetoelektrischen Teilchen mechanisch belasten; und/oder
ferner umfassend eine Lichtquelle (13), die selektiv zum Ausstrahlen von Licht betrieben werden kann, das auf die magnetoelektrischen Teilchen fällt.

15. Wasserreinigungsanordnung (201), umfassend:
einen Wasserreinigungsreaktor (101) nach einem der Ansprüche 11 bis 14;
einen Zirkulationstank (4), der in Fluidverbindung mit dem Wasserreinigungsreaktor steht, derart, dass Fluid vom Zirkulationstank zum Wasserreinigungsreaktor fließen kann, und derart, dass Fluid, das durch den Wasserreinigungsreaktor geflossen ist, in den Zirkulationstank fließen kann;
einen Sensor (5), der dafür ausgelegt ist, den Verschmutzungsgrad eines im Zirkulationstank enthaltenen Fluids zu erfassen;
eine Pumpe (9), die Fluid aus dem Zirkulationstank in den Wasserreinigungsreaktor fördern kann;
eine Steuerung (6), die dafür ausgelegt ist, die Pumpe so zu betreiben, dass sie Fluid aus dem Zirkulationstank in den Wasserreinigungsreaktor fördert, wenn der Sensor erfasst, dass der Verschmutzungsgrad im Fluid über einem vordefinierten Wert liegt.

## Revendications

1. Procédé de traitement d'eau contenant des polluants, le procédé comprenant les étapes suivantes :
la mise en contact de ladite eau avec des particules magnétoélectriques qui se trouvent à l'intérieur d'une cuve tubulaire (21) d'un réacteur d'épuration d'eau (101, 102, 103), de telle sorte que les polluants présents dans l'eau entrent en contact avec les surfaces des particules magnétoélectriques (60) ;
l'application d'un champ magnétique alternatif aux particules magnétoélectriques de manière à générer des charges électriques sur la surface desdites particules magnétoélectriques, dans lequel lesdites charges électriques sur la surface desdites particules magnétoélectriques provoquent des réactions d'oxydoréduction qui dégradent lesdits polluants dans l'eau, dans lequel ledit champ magnétique alternatif est généré par une ou plusieurs bobines (11) qui sont enroulées autour de la cuve (21) ;
dans lequel chacune desdites particules magnétoélectriques comprend un matériau magnétostrictif et un matériau piézoélectrique, dans lequel lesdites particules magnétoélectriques comprennent une pluralité de couches magnétostrictives, chaque couche magnétostrictive étant recouverte d'un revêtement piézoélectrique respectif, et/ou, lesdites particules magnétoélectriques comprennent un coeur magnétostrictif noyé dans une matrice piézoélectrique, et/ou lesdites particules magnétoélectriques comprennent un coeur magnétostrictif revêtu d'un revêtement piézoélectrique.

2. Procédé selon la revendication 1 dans lequel l'étape de mise en contact de ladite eau avec lesdites particules magnétoélectriques comprend l'ajout de particules magnétoélectriques à ladite eau.

3. Procédé selon la revendication 1 dans lequel l'étape de mise en contact de ladite eau avec lesdites particules magnétoélectriques comprend le passage de l'eau à travers une membrane poreuse qui comprend lesdites particules magnétoélectriques.

4. Procédé selon l'une quelconque des revendications 1 à 3, dans lequel lesdits polluants comprennent des polluants organiques, et dans lequel lesdites charges électriques sur la surface desdites particules magnétoélectriques provoquent des réactions d'oxydoréduction qui oxydent lesdits polluants organiques ; et/ou
dans lequel lesdits polluants comprennent des métaux lourds toxiques, et dans lequel lesdites charges électriques sur la surface desdites particules magnétoélectriques provoquent des réactions d'oxydoréduction qui réduisent et/ou oxydent lesdits métaux en métaux moins nocifs, réduisant ainsi la toxicité desdits métaux.

5. Procédé selon les revendications 2, dans lequel l'étape d'ajout de particules magnétoélectriques à ladite eau comprend l'ajout d'un dosage de particules magnétoélectriques compris entre 0,1 mg/mL et 20 mg/mL à ladite eau.

6. Procédé selon l'une quelconque des revendications 1 à 5, dans lequel l'étape d'application d'un champ magnétique aux particules magnétoélectriques comprend l'application d'un champ magnétique de 0,1 mT-50 mT aux particules magnétoélectriques.

7. Procédé selon l'une quelconque des revendications 1 à 6, dans lequel l'étape d'application d'un champ magnétique aux particules magnétoélectriques comprend l'application d'un champ magnétique d'une fréquence de 0,1 kHz à 10 kHz aux particules magnétoélectriques.

8. Procédé selon l'une quelconque des revendications 1 à 7, dans lequel l'étape d'application d'un champ magnétique aux particules magnétoélectriques comprend l'application du champ magnétique pendant une période de 1 à 5 heures.

9. Procédé selon la revendication 2, et selon l'une quelconque des revendications 4 à 9 dépendant de la revendication 2, comprenant en outre l'étape de collecte desdites particules magnétoélectriques de ladite eau à l'aide d'un aimant.

10. Procédé selon la revendication 9, dans lequel le procédé comprend en outre le lavage desdites particules magnétoélectriques collectées avec de l'eau déminéralisée et/ou de l'éthanol, le séchage desdites particules magnétoélectriques lavées, et la répétition des étapes de la revendication 1 à l'aide desdites particules magnétoélectriques séchées.

11. Réacteur d'épuration d'eau (101, 102, 103), approprié pour entreprendre un procédé selon l'une quelconque des revendications 1 à 10, le réacteur d'épuration d'eau (101, 102, 103) comprenant,
une cuve tubulaire (21) pouvant recevoir de l'eau contenant des polluants ;
des particules magnétoélectriques (60), lesquelles sont situées à l'intérieur d'une cuve tubulaire (21), dans lequel chacune desdites particules magnétoélectriques comprend un matériau magnétostrictif et un matériau piézoélectrique, dans lequel lesdites particules magnétoélectriques comprennent une pluralité de couches magnétostrictives, chaque couche magnétostrictive étant revêtue d'un revêtement piézoélectrique respectif, et/ou, lesdites particules magnétoélectriques comprennent un coeur magnétostrictif noyé dans une matrice piézoélectrique, et/ou lesdites particules magnétoélectriques comprennent un coeur magnétostrictif recouvert d'un revêtement piézoélectrique ;
une ou plusieurs bobines (11) qui conduisent un courant de telle sorte que les une ou plusieurs bobines (11) génèrent un champ magnétique alternatif, dans lequel lesdites une ou plusieurs bobines (11) sont enroulées autour de la cuve (21) et sont disposées par rapport aux particules magnétoélectriques de telle sorte que les particules magnétoélectriques soient immergées dans ledit champ magnétique alternatif de telle sorte que le champ magnétique alternatif génère des charges électriques sur la surface desdites particules magnétoélectriques, dans lequel lesdites charges électriques sur la surface desdites particules magnétoélectriques provoquent des réactions d'oxydoréduction qui dégradent lesdits polluants dans l'eau.

12. Réacteur d'épuration d'eau selon la revendication 11 dans lequel les particules magnétoélectriques sont fournies dans une membrane poreuse (14).

13. Réacteur d'épuration d'eau selon la revendication 11 dans lequel les particules magnétoélectriques sont fournies dans une solution qui peut être mélangée à de l'eau polluée à traiter.

14. Réacteur d'épuration d'eau selon la revendication 11 ou 12, comprenant en outre un transducteur à ultrasons (12) qui peut être actionné sélectivement pour émettre des ondes acoustiques qui confèrent une contrainte mécanique aux particules magnétoélectriques ; et/ou comprenant en outre une source lumineuse (13) qui peut être actionnée sélectivement pour émettre une lumière incidente sur les particules magnétoélectriques.

15. Ensemble d'épuration d'eau (201) comprenant,
un réacteur d'épuration d'eau (101) selon l'une quelconque des revendications 11 à 14 ;
un réservoir de recyclage (4) raccordé de manière fluidique au réacteur d'épuration d'eau, de telle sorte que le fluide puisse s'écouler depuis le réservoir de recyclage jusqu'au réacteur d'épuration d'eau, et de telle sorte que le fluide qui s'est écoulé à travers le réacteur d'épuration d'eau puisse s'écouler dans le réservoir de recyclage ;
un capteur (5) configuré pour détecter le niveau de pollution dans un fluide contenu dans le réservoir de recyclage ;
une pompe (9) qui peut pomper le fluide depuis le réservoir de recyclage jusqu'au réacteur d'épuration d'eau ;
un contrôleur (6) configuré pour actionner la pompe afin de pomper un fluide depuis le réservoir de recyclage jusqu'au réacteur d'épuration d'eau si le capteur détecte que le niveau de pollution dans ledit fluide est supérieur à un niveau prédéfini.
